# EUROPÄISCHE PATENTANMELDUNG

(11) **EP 0 871 058 A2**
(43) Veröffentlichungstag der Anmeldung: **14.10.1998**
(21) Anmeldenummer: 98104251.8
(22) Anmeldetag: 10.03.1998
(51) Int. Cl.: G02F 1/13

(54) **Vorrichtung und Verfahren zum Aufbau von LCD-Zellen**

(30) Priorität: 11.04.1997 DE 19715298
(71) Anmelder: ROBERT BOSCH GMBH, 70442 Stuttgart (DE)
(72) Erfinder: Ginter, Ewald, 70619 Stuttgart (DE); Schurig, Dieter, 65510 Wllrabenstein (DE); Fronius, Hans-Joachim, D-70619 Stuttgart (DE)

(57) **Zusammenfassung**

Es wird eine Vorrichtung sowie ein Verfahren zur Herstellung von LCD-Zellen vorgeschlagen, bei dem mindestens ein Substrat aus einer Substratträgerscheibe und einer beliebigen Zahl von einzelnen optischen Platten besteht.

## Beschreibung

### Stand der Technik

Die Erfindung geht aus von einer Substratträgerscheibe zur Halterung von optischen Platten sowie einem Verfahren zum Aufbau von LCD-Zellen mit Substratträgerscheiben nach der Gattung der unabhängigen Ansprüche.

Aus dem Stand der Technik ist bekannt, daß zur Herstellung von LCD-Zellen zwei Scheiben aus Glas oder ähnlichem Material miteinander verklebt werden. Der entstehende Zwischenraum zwischen den Scheiben wird von der optisch aktiven Flüssigkeit gefüllt. Die beiden Scheiben müssen zum Aufbau einer LCD-Zelle nahezu die gleichen Außenabmessungen haben.

Aus Gründen der Prozeßvereinfachung werden größere Scheiben für die Herstellung der Front- oder Hinterscheiben der LCD-Zelle verwendet, wobei diese größeren Scheiben mehrere einzelne LCD-Zellenabdeckungen darstellen. Diese Substrate durchlaufen den gesamten Herstellungsprozeß der Front- und Hinterscheiben der LCD-Zelle und werden mit der jeweils anderen Scheibe fixiert. Erst anschließend werden die Scheiben in einzelne Displays zerschnitten.

Bei der Herstellung mehrerer LCD-Zellen über größere Scheiben, die als Substrat dienen, müssen beide Substrate gleich groß sein. Dadurch kann es zu Problemen kommen, wenn zum Beispiel eine Scheibe, das heißt eine Zellhälfte durch Zukauf dazukommt. Werden Teile eines Substrats bei der Herstellung fehlerhaft hergestellt, muß trotzdem das gesamte Substrat mit der Gegenplatte verklebt werden und die Teile der Gegenplatte, die an und für sich in Ordnung gewesen wären, werden ebenfalls unbrauchbar.

### Vorteile der Erfindung

Die erfindungsgemäße Substratträgerscheibe mit den kennzeichnenden Merkmalen des unabhängigen Anspruchs hat demgegenüber den Vorteil, daß die Substratträgerscheibe einzelne optische Platten fixieren kann, so daß diese Platten beliebiges Format haben können.

Durch die in den Unteransprüchen aufgeführten Maßnahmen sind vorteilhafte Weiterbildungen und Verbesserungen der im unabhängigen Anspruch angegebenen Substratträgerscheibe möglich.

Besonders vorteilhaft ist, daß beliebige optische Platten entweder in Aussparungen der Trägerplatte eingepaßt werden können, oder auf der Oberfläche der Substratträgerscheibe fixierbar sind. Dadurch ist es möglich, einzelne Substratteile, die bei der Herstellung gelungen sind, weiterzuverwenden, während defekte Substratteile aus der Herstellung der LCD-Zelle entfernt werden können.

Vorteilhafterweise werden die optischen Platten mit einem Klebemittel oder durch Unterdruck an den geeigneten Positionen der Substratträgerscheiben fixiert. Dadurch ist ein Verrutschen der einzelnen optischen Platten verhindert, so daß sich die optischen Platten immer an den Positionen befinden, an denen sie auch bei der Herstellung auf einem gemeinsamen Substrat positioniert wären.

Vorteilhafterweise weist die Substratträgerscheibe zur Fixierung durch Unterdruck auf der Rückseite Vakuumkanäle auf. Zudem ist es von Vorteil, wenn die Rückseite der Substratträgerscheibe durch Positionsmarken ergänzt wird, wodurch ein positionsgenaues Fixieren der optischen Platten auf der Substratträgerscheibe erlaubt ist.

Das erfindungsgemäße Verfahren mit den kennzeichnenden Merkmalen der unabhängigen Ansprüche hat den Vorteil, daß durch den Einsatz einer Substratträgerscheibe, als einer Substratplatte für die Herstellung von LCD-Zellen, eine effektivere Nutzung von Substraten und eine Verringerung der Ausschußraten erreicht wird.

### Zeichnung

Ausführungsbeispiele der Erfindung sind in der Zeichnung dargestellt und in der nachfolgenden Beschreibung näher erläutert. Es zeigt Figur 1 eine Substratträgerscheibe, Figur 2 eine Substratträgerscheibe mit optischen Platten, Figur 3 den Zusammenbau zweier Substratträgerscheiben, Figur 4 die Positionsmarken einer Substratträgerscheibe und Figur 5 die Vakuumkanäle einer Substratträgerscheiben.

### Beschreibung des Ausführungsbeispiels

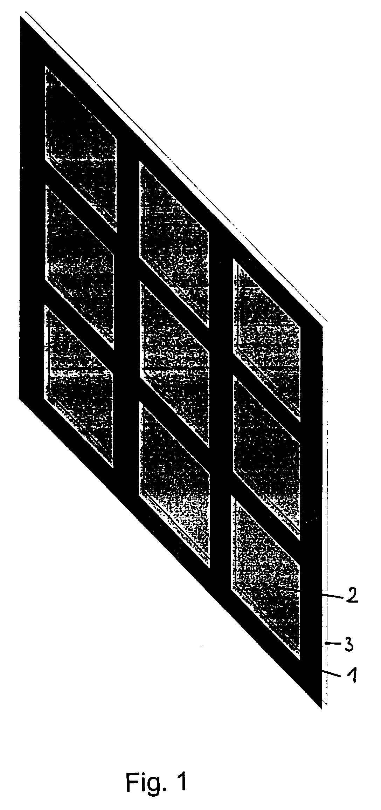

Figur 1 zeigt den Aufbau einer Substratträgerscheibe 1, die aus einer Platte der Dicke 3 besteht. Die Platte weist Aussparungen 2 auf, die in regelmäßigen Abständen angeordnet sind. Die Substratträgerscheibe 1 kann aus Glas, Metall oder Keramik bestehen mit Aussparungen 2 für die jeweiligen optischen Platten.

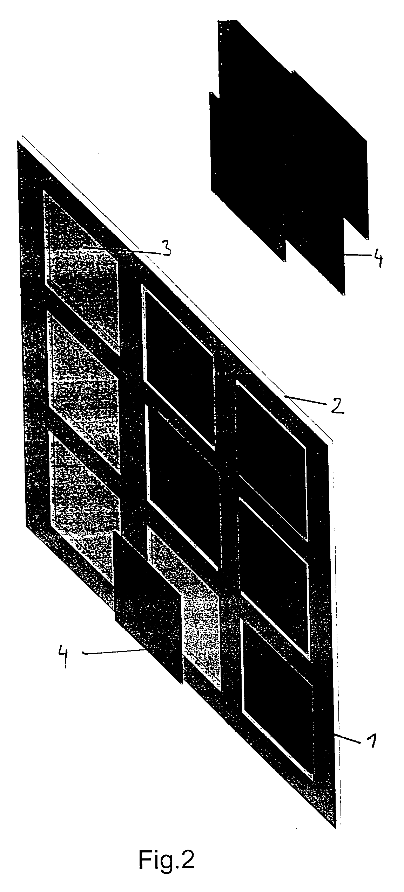

Figur 2 zeigt den Einbau von optischen Platten 4 in eine Substratträgerscheibe 1. Die optischen Platten 4 werden in die Aussparungen 2 der Substratträgerscheibe 1 eingelegt. In die Aussparungen 2 können auch Blindstücke, zum Beispiel einfache Glasplatten eingelegt werden, wenn auf dem Gegenstück ein defektes Bauteil vorliegt. Die optischen Platten 4 können von zerstörten Substratscheiben stammen, oder aus einer Herstellung, bei dem ein Substrat sowohl defekte als auch funktionsfähige Bauteile enthält, es können Einzelsubstrate aus eigener oder fremder Fertigung sein, oder fremdgefertigte Substrate, deren Außenabmessung nicht mit dem eigenen Gegensubstrat übereinstimmt.

Die optischen Platten 4 liegen zunächst lose in der Substratträgerscheibe. Die Substratträgerscheibe wird auf das Gegensubstrat aufgebracht und die lose in der Trägerscheibe einliegenden optischen Platten 4 in die richtige Position ausgerichtet. In diesen Positionen werden die optischen Platten 4 mit den Gegenbauteilen auf dem Gegensubstrat ausgehärtet.

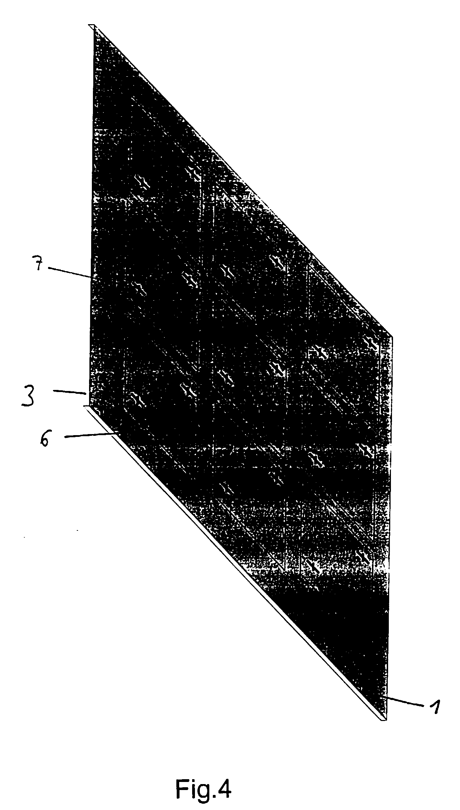

Eine weitere Herstellungsmethode verwendet einen UV-härtenden Kleber, der die optischen Platten 4 in der Substratträgerscheibe 1 in der richtigen Position fixiert. Um das Fixieren zu erleichtern, sind auf der Rückseite der Substratträgerscheibe 1, wie in Figur 4 dargestellt, Positionsmarken 7 angebracht. Anschließend wird die Substratträgerscheibe auf dem Gegensubstrat aufgebaut und ausgehärtet. Nach dem Aushärten dieser Verbindung wird die Verklebung der optischen Platte zur Substratträgerscheibe gelöst. Anschließend werden die LCD-Zellen zugeschnitten.

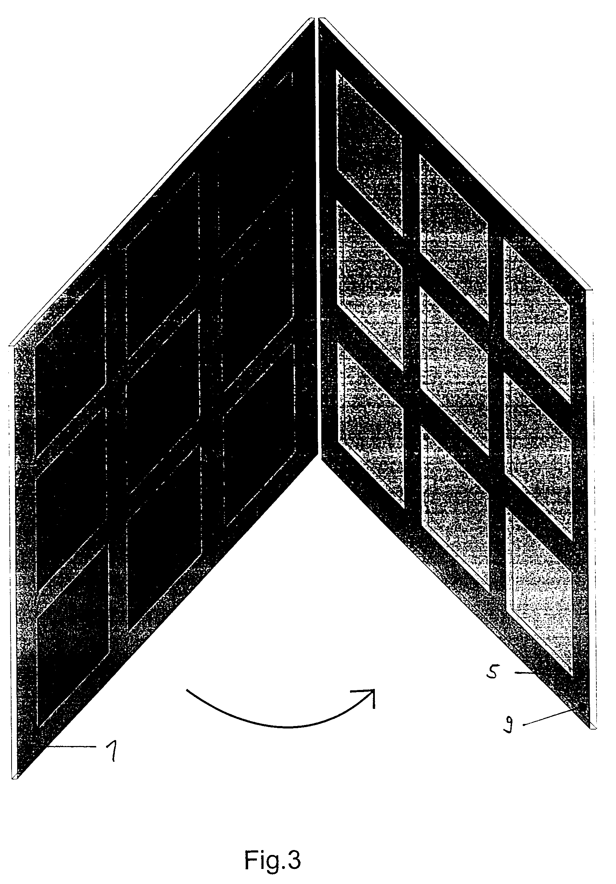

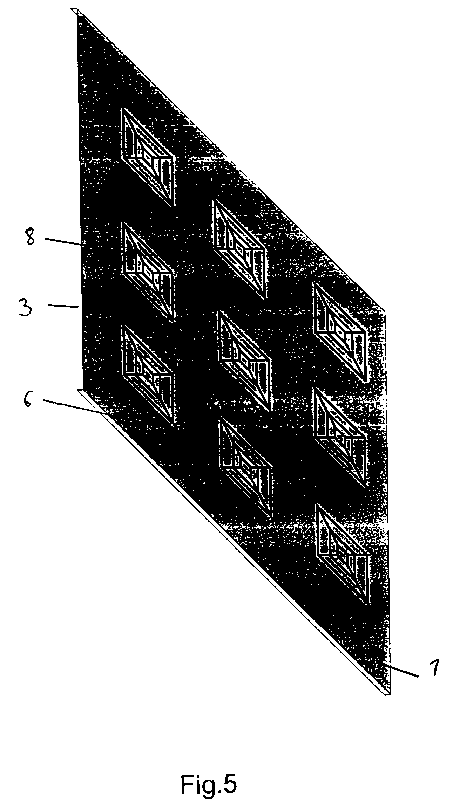

Ein weiteres Herstellungsverfahren verwendet eine Substratträgerscheibe 1, wie sie in Figur 5 dargestellt ist. Die Substratträgerscheibe 1 weist auf ihrer Rückseite 6 Vakuumkanäle 8 auf. Die optischen Platten 4 werden über diese Vakuumkanäle auf die Oberfläche der Substratträgerscheibe gesaugt und in der richtigen Position fixiert. Die Substratträgerscheibe wird mit dem Gegensubstrat zusammengebaut. Anschließend wird der Unterdruck entspannt und die optischen Platten 4 werden auf dem Gegensubstrat einzeln ausgehärtet. Es ist ebenfalls möglich, die optischen Platten auch mechanisch auf der Substratträgerscheibe zu fixieren. Figur 3 zeigt den Aufbau von LCD-Zellen aus zwei Substratträgerscheiben. Die Substratträgerscheibe 1 wird auf das Gegensubstrat 5 aufgebracht. Um die Positionierung der beiden Substratplatten zu vereinfachen, sind am Rande der Substratträgerscheiben Justiermarken oder auch andere Justierhilfen angebracht.

Eine weitere Ausführungsform der Substratträgerscheibe 1 ist eine einfache plane Platte aus Glas, Metall oder Keramik. Sie weist keine Vertiefungen zur Aufnahme der optischen Platten 4 auf. Sie ist mit Positionsmarken 7 versehen, die eine Positionierung der optischen Platten 4 ermöglichen. Eine solche Substratträgerscheibe dient zur Aufnahme von allen möglichen optischen Platten 4, auch von optischen Platten verschiedener Größe und Außenmaßen. Auch die plane Substratträgerscheibe 1 kann Vakuumkanäle 8 zur Erzeugung eines Unterdrucks auf der Vorderseite der Scheibe aufweisen.

## Patentansprüche

1. Substratträgerscheibe zur Halterung von optischen Platten, dadurch gekennzeichnet, daß die Substratträgerscheibe (1) mindestens eine Aussparung (2) zur Aufnahme von optischen Platten (4) aufweist.

2. Substratträgerscheibe zur Halterung von optischen Platten nach Anspruch 1, dadurch gekennzeichnet, daß die Aussparungen (2) eine regelmäßige Anordnung aufweisen.

3. Substratträgerscheibe zur Halterung von optischen Platten, dadurch gekennzeichnet, daß die optischen Platten (4) auf der planen Oberfläche der Substratträgerscheibe fixiert sind.

4. Substratträgerscheibe zur Halterung von optischen Platten nach Anspruch 1 bis 3, dadurch gekennzeichnet, daß (4) Blindstücke statt optischer Platten aufnehmbar sind.

5. Substratträgerscheibe zur Halterung von optischen Platten nach Anspruch 1 bis 4, dadurch gekennzeichnet, daß der Rahmen der Trägerscheibe Montagehilfen (9) aufweist.

6. Substratträgerscheibe zur Halterung von optischen Platten nach Anspruch 1 bis 5, dadurch gekennzeichnet, daß die optischen Platten (4) und/oder Blindstücke mit einem Klebemittel oder durch Unterdruck an den geeigneten Positionen fixiert sind.

7. Substratträgerscheibe zur Halterung von optischen Platten nach Anspruch 1 bis 6, dadurch gekennzeichnet, daß die Rückseite (6) der Trägerscheibe (1) an der Position der optischen Platten Vakuumkanäle (8) aufweist.

8. Substratträgerscheibe zur Halterung von optischen Platten nach Anspruch 1 bis 7, dadurch gekennzeichnet, daß die Rückseite (6) der Trägerscheibe (1) an der Position der optischen Platten Positionsmarken (7) besitzt.

9. Verfahren zum Aufbau von LCD-Zellen aus zwei Platten, wobei die Platten in einem definierten Abstand zueinander fixiert werden, dadurch gekennzeichnet, daß mindestens eine der Platten von einer Substrat-Trägerplatte mit einzel fixierten optischen Platten (4) gebildet wird.

10. Verfahren zum Aufbau von LCD-Zellen aus zwei Platten nach Anspruch 9, dadurch gekennzeichnet, daß die Substrat-Trägerplatte (1) mit losen optischen Platten (4) auf dem Gegensubstrat (5) aufgebracht wird und die Positionierung der optischen Platten vor dem Aufbau der LCD-Zellen erfolgt.

11. Verfahren zum Aufbau von LCD-Zellen aus zwei Platten nach Anspruch 9, dadurch gekennzeichnet, daß die Substrat-Trägerplatte (1) mit verklebten optischen Platten (4) auf dem Gegensubstrat (5) aufgebracht und verklebt wird und die Verbindung der optischen Platten zur Substrat-Trägerplatte (1) gelöst wird.

12. Verfahren zum Aufbau von LCD-Zellen aus zwei Platten nach Anspruch 9, dadurch gekennzeichnet, daß die Substrat-Trägerplatte (1) mit durch Unterdruck fixierten optischen Platten (4) auf dem Gegensubstrat (5) aufgebracht wird und die Verbindung gelöst wird und die Substrate miteinander verklebt werden.
